# FASCICULE DE BREVET EUROPEEN

(11) **EP 2 559 619 B1**
(45) Date de publication et mention de la délivrance du brevet: **15.04.2015**
(21) Numéro de dépôt: 12167328.9
(22) Date de dépôt: 09.05.2012
(51) Int. Cl.: B64D 45/02, F16L 3/237, F16L 3/10

(54) **Dispositif de fixation de tuyauteries d'un aéronef**
Befestigungsvorrichtung für die Rohrleitungen eines Luftfahrzeugs
Device for attaching aircraft lines

(30) Priorité: 03.05.2011 FR 1153751
(43) Date de publication de la demande: 20.02.2013
(73) Titulaire: Airbus Operations S.A.S., 31060 Toulouse (FR)
(72) Inventeur: Courpet, Alexis, 31620 FRONTON (FR); Barre, Thomas, 31500 TOULOUSE (FR); Bourbon, Olivier, 82600 AUCAMVILLE (FR); Biteau, Mathieu, 31300 TOULOUSE (FR); Roques, Jean-Marc, 31770 COLOMIERS (FR); Sable, Cédric, 31300 TOULOUSE (FR)
(74) Mandataire: Gicquel, Olivier Yves Gérard

(56) Documents cités:
- EP-A1- 1 388 699
- EP-A1- 2 239 488
- EP-A2- 1 701 076
- WO-A1-2007/075141
- WO-A2-2011/007100
- DE-U- 7 244 573
- US-A- 4 971 268
- US-A1- 2009 218 451
- US-A1- 2010 193 651

## Description

La présente invention concerne un dispositif de fixation de tuyauteries d'un aéronef assurant une protection contre les passages de courants de foudre et les arcs électriques. Un tel dispositif est connu du document WO 2011/007100 A2.

Dans les aéronefs à structure composite, lors d'un impact foudre, des courants électriques peuvent se propager au travers de la structure de l'aéronef au niveau du fuselage et de la voilure et ces courants peuvent éventuellement atteindre la structure des réservoirs de carburant.

La structure de tels aéronefs est généralement en carbone relativement peu conducteur et les courants électriques vont avoir tendance à passer de manière privilégiée dans les éléments métalliques montés sur la structure.

Au niveau des réservoirs de l'aéronef cheminent des tuyauteries rigides métalliques qui sont fixées à l'aide de bague de serrage sur des supports métalliques reliés au réseau de masse de l'appareil et eux même fixés sur la structure composite.

De ce fait les supports métalliques peuvent conduire les courants venant de la structure composite et si les courants de foudre rencontraient les réservoirs ils pourraient avoir tendance à emprunter le chemin de plus faible résistance et se propager dans les tuyauteries métalliques.

Du fait de la proximité entre les supports métallique et les tuyauteries métalliques, il peut y avoir création d'arcs électriques.

Il est donc nécessaire de rompre le passage du courant en intercalant des isolants, ces isolants devant en outre empêcher la création d'arcs électriques entre les tuyauteries et les supports métalliques.

La présente invention apporte une solution à ce problème principalement au niveau de bagues de serrage servant à la fixation de la tuyauterie rigide métallique dans un réservoir d'aéronef en matériaux composite.

Le dispositif de l'invention a pour but de permettre la reprise de la fixation de la tuyauterie sur la structure au moyen de supports formant des isolants et séparateurs électriques et de permettre de mettre les bagues de serrage à la masse du réseau électrique de l'aéronef.

Ce dispositif doit résister au kérosène, s'adapter au différents diamètres requis sur une installation système, permettre l'installation de une ou plusieurs tuyauteries, les isoler les courants de forte intensité tels que courts circuits ou courants de foudre, éviter les arcs électriques et évacuer les charges électrostatiques.

Le dispositif doit être dimensionné pour tenir les efforts existants et permettre l'utilisation des composants existants tels que visserie, tuyaux métalliques et autre.

Le dispositif doit permettre une translation de la tuyauterie pour permettre une installation sans contrainte.

Pour ce faire, l'invention propose un dispositif de fixation de tuyauterie d'un aéronef selon les caractéristiques de la revendication 1.

Avantageusement, la colonne d'un premier mors complète le muret d'un second mors sur le côté libre du socle dudit second mors.

Selon un mode de réalisation particulier, le muret comporte plusieurs découpes de réception de tubes.

Selon une variante dans le cas où le muret comportant plusieurs découpes de réception de tubes, la face supérieure du muret comprend entre les découpes au moins un profil crénelé d'accroissement de distance courante entre tubes entre lesdites découpes.

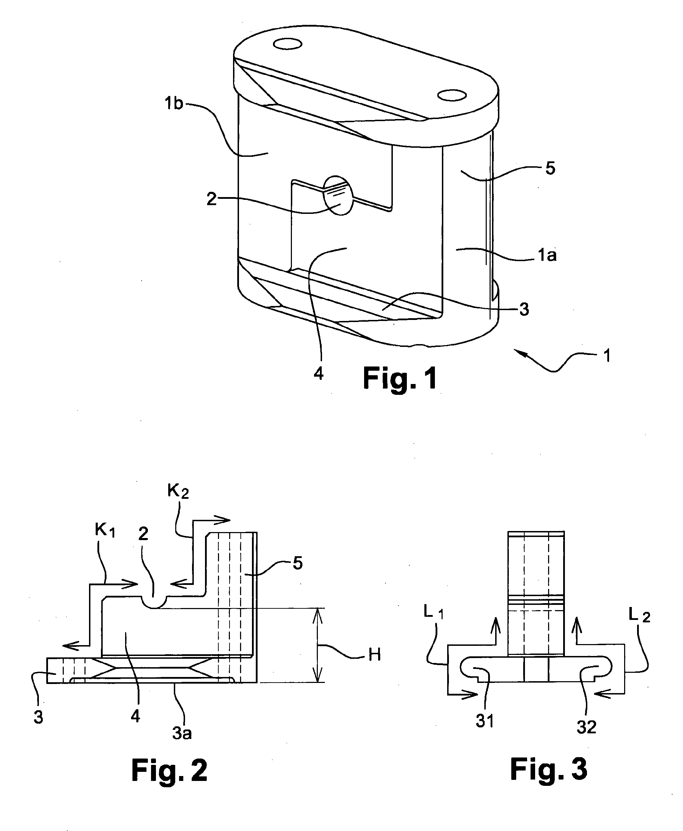

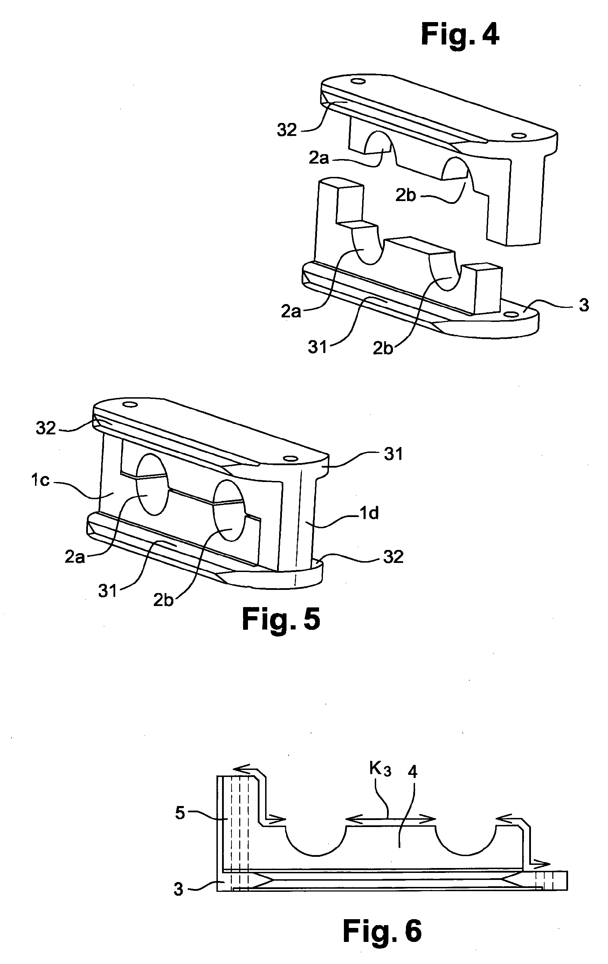

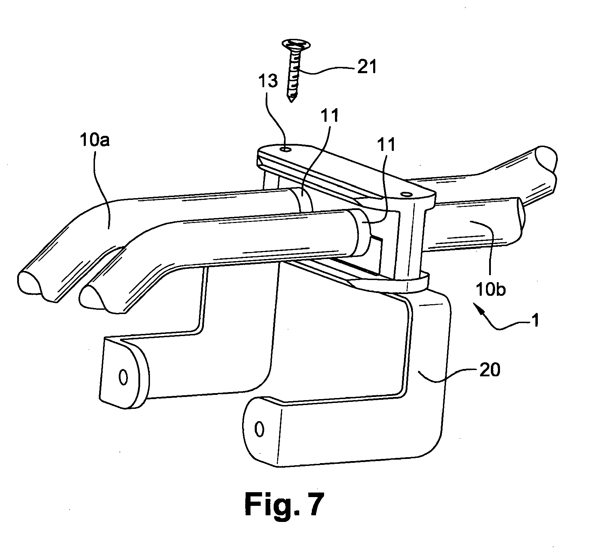

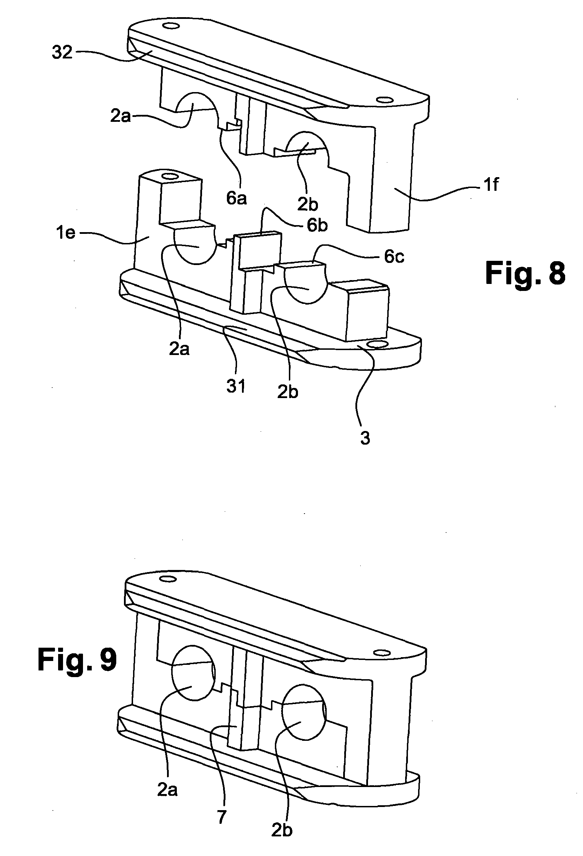

D'autres caractéristiques et avantages de l'invention seront apparentes à la lecture de la description qui suit d'exemples de réalisation non limitatifs de l'invention accompagnés des dessins qui représentent:
en figure 1: une vue en perspective d'un premier exemple de réalisation d'un dispositif de fixation ;
en figure 2: un mors du dispositif de la figure 1 en vue de face;
en figure 3: le mors de la figure 2 en vue de côté;
en figure 4: une vue en perspective d'un second exemple de réalisation d'un dispositif de fixation avant emboîtement;
en figure 5: une vue en perspective du dispositif de la figure 4 après emboîtement;
en figure 6: un mors du dispositif de la figure 4 en vue de face;
en figure 7: une vue en perspective d'un mode de réalisation d'assemblage de tubes au moyen du dispositif de la figure 4;
en figure 8: une vue en perspective d'une variante du dispositif selon l'invention de la figure 4 avant emboîtement;
en figure 9: une vue en perspective du dispositif de la figure 8 après emboîtement;

Le dispositif de fixation de tuyauterie pour aéronef est constitué une bague de serrage 1 dont un premier exemple de réalisation est représenté aux figures 1 à 3, un second exemple est représenté aux figures 4 à 6 alors qu'une variante de ce second exemple, selon l'invention, est représenté aux figures 8 et 9 et qui est représenté en utilisation à la figure 7.

La bague de serrage de la figure 1 est constituée de deux mors 1a, 1b qui comportent une découpe transversale 2 de maintien d'un tube d'une tuyauterie en particulier d'une tuyauterie carburant de l'aéronef.

La bague de serrage des figures 4 et 8 comportent deux mors 1c, 1d et 1e, 1f qui comportent deux découpes transversales 2a, 2b pour maintenir deux tubes.

Les mors sont conformés en séparateurs de coupure d'arcs rampants entre les tubes et entre tubes et supports 20 dont des exemples sont représentés aux figures 9A et 9B.

Pour ce faire, de retour aux figures 2 et 3, les contours des mors sont conçus pour obtenir une distance « dans l'air » déterminée en sorte d'éviter tout arc entre les pièces métalliques aux tensions pouvant être rencontrées en cas de foudre entre tuyauterie et structure.

Pour fixer les idées, une contrainte de réalisation est que la distance minimale entre 2 partie métallique distincte choisie est de 10 mm afin d'éviter le claquage électrique sachant que le claquage dans l'air se produit pour une telle distance vers 10 kilovolts. Selon l'exemple représenté, on se fixe une distance moyenne de l'ordre de 25 mm entre les tubes et entre les tubes et la structure, cette distance pouvant être réduite par l'ajout de profils allongeant la distance courante entre pièces (allongement du cheminement en surface des pièces) ce qui conserve une bonne immunité contre les arcs rampants.

Sur la figure 2, la hauteur H entre la face inférieure 3a du mors et le point bas de la découpe 2 est déterminée pour obtenir une isolation suffisante et les chemins K1 et K2 suivant le profil de la face supérieure du mors entre l'extérieur du mors et les découpes donnent une distance maximale pour le profil pour s'opposer aux arcs rampants.

Sur la figure 3, les faces latérales des mors comprennent des ailes 31, 32 qui accroissent les chemins L1, L2 en surface du mors.

A titre d'exemple illustratif, les distances K1, K2 minimales sont pour une isolation conforme à l'application, de 25 mm, la distance des chemins L1 et L2 minimale étant aussi de 25 mm.

Les mors 1a, 1 b sont des pièces symétriques emboîtables de même que les mors 1 c, 1 d de l'exemple de la figure 4 et les mors 1 e, 1 f de la figure 8.

Les mors comportent un socle 3, un muret 4 qui s'élève à partir du socle, disposé longitudinalement sur le socle pour recevoir le ou les tubes dans la découpe transversale 2, 2a, 2b en demi lune réalisée dans la face supérieure du mors et une colonne 5 prolongeant le muret sur un premier côté du muret.

Dans le cadre de l'augmentation du chemin dans l'air, les faces supérieures du socle, du muret et de la colonne réalisant un profil en marches d'escalier comme représenté en figure 2 ce qui crée les chemins K1, K2 à la surface supérieure des mors.

Le muret 4 est décalé d'un côté longitudinal du socle 3, laissant libre un côté du socle et la colonne 5 d'un premier mors 1a complète le muret 4 d'un second mors 1 b sur le côté libre du socle 3 dudit second mors.

Il en est de même pour l'exemple de la figure 4 recevant deux tubes 10a, 10b représentés sur l'exemple de la figure 7.

Dans l'ensemble des exemples représentés et, comme en figure 3, le socle comporte une base élargie par rapport au muret et réalise un profil d'accroissement de distance courante entre un support 20 et le ou les tubes 10a, 10b.

Pour ce faire, le socle dépasse latéralement sur les deux côtés latéraux du muret et de la colonne et forme des ailes 31, 32 pour accroître la distance L1, L2 d'immunité contre les arcs rampants comme vu précédemment.

Dans le cas où le muret comporte plusieurs découpes de réception de tubes, la distance K3 entre découpes selon la figure 6 vue de face d'un mors de la bague de serrage est déterminée pour supprimer tout risque d'arc entre tubes.

A titre illustratif la distance K3 est choisie supérieure ou égale à 25 mm.

Pour accroître encore cette distance d'immunité contre les arcs rampants, selon l'exemple des figures 8 et 9, la face supérieure du muret comprend entre les découpes un ou plusieurs profils crénelés 6a, 6b, 6c (trois selon l'exemple) d'accroissement de distance courante et entre les découpes.

Ces profils crénelés sont avantageusement distribués de manière complémentaire sur les deux mors 1e, 1f pour leur conserver un profil symétrique de sorte que les mors soient identiques et ne nécessitent qu'un seul moule de fabrication.

Toujours selon cet exemple et le même but d'accroître la distance d'immunité contre les arcs rampants, les flancs latéraux du muret comprennent , selon l'invention, des nervures 7 d'accroissement de distance courante entre tubes et entre lesdites découpes.

Ces nervures peuvent voir leur hauteur adaptée tout comme la longueur des ailes 31, 32 pour accroître la distance à la surface des mors si nécessaire.

La figure 9 permet de voir les mors 1e 1f emboîtés et les profils complémentaires réalisant le crénelage imbriqués.

La bague de serrage réalise donc un séparateur de coupure électrique adapté à isoler parfaitement les tubes entre eux et à isoler les tubes de leur environnement, vis etc... , sa conception permettant d'obtenir une distance dans l'air requise pour éviter tout arc entre les pièces métalliques.

Selon l'exemple de la figure 7, les mors sont réalisés dans un matériau hautement résistif pour s'opposer à des passages de courant forts mais suffisamment conducteur pour permettre d'évacuer les charges électrostatiques créées par le passage des fluides dans les tubes.

Dans ce cas, les tubes métalliques ou conducteurs sont décapés et mis à nu au niveau de leur passage dans la bague 1 pour réaliser une continuité électrique résistive entre le tube et la structure de l'aéronef au travers de la bague, la structure étant ici représentée par un berceau support 20 métallique.

La fixation de la bague 1 sur le berceau 20 est réalisée par des vis 21 traversant les bagues au niveau de trous 13 et se vissant dans des trous taraudés du berceau 20, ce qui effectue le serrage des mors sur les tubes. Les découpes transversales 2 sont dimensionnées pour retenir les tubes tout en permettant une translation de la tuyauterie pour en faciliter l'installation.

D'autres solutions pour la fixation des bagues sur leurs berceaux restent bien entendu possibles.

Pour réaliser les bagues les matériaux thermoplastiques seuls seront évités car ce sont des isolants susceptibles de se charger en électricité statique et il y a risque d'arc électrique au niveau de la bague.

La fibre de verre chargé carbone ou le PEEK chargé carbone permettant de stopper les courants à fortes intensité et drainer les courants électrostatiques seront les matériaux préférés.

Les bagues de l'invention permettent le montage et la reprise de tuyauterie rigides métalliques dans des réservoirs en matériaux composites soumis à des courants de fortes intensité.

Elles sont adaptable à tout type d'environnement et à tout système, hydraulique notamment, installé ou non dans un réservoir.

Plus généralement les principes qui guident la réalisation du dispositif de l'invention soit en alternatives soit en cumul sont que le muret 4 comportant plusieurs découpes 2a, 2b de réception de tubes, la distance entre découpes est choisie en fonction d'une tension de claquage déterminée;

Le socle comporte une base élargie par rapport au muret et réalise un profil d'accroissement de distance courante entre un support 20 et le ou les tubes 10a, 10b;

La hauteur du socle et du muret sont déterminées pour maintenir le ou les tubes à une distance déterminée de la structure;

Le muret est configuré en sorte de maintenir un tube à une distance prédéterminée de la structure ou d'un autre tube.

Il est aussi possible de réduire l'encombrement de la bague de serrage en incluant des profils séparateurs comme vu plus haut en référence aux figures 8 et 9 qui permettent d'obtenir la surface requise pour éviter la génération d'arc rampant tout autour de la tuyauterie métallique.

L'invention n'est pas limitée aux exemples représentés et notamment, la bague de serrage peut recevoir trois tubes ou plus.

## Revendications

1. Dispositif de fixation de tuyauterie d'un aéronef, qui comporte une bague de serrage (1) constituée de deux mors (1a, 1b, 1c, 1d, 1e, 1f) comportant au moins une découpe transversale (2, 2a, 2b) de maintien d'au moins un tube (10a, 10b) de ladite tuyauterie, les mors étant conformés en séparateurs de coupure d'arcs électriques rampants et comportant pour ce faire un socle (3), un muret (4) qui s'élève à partir du socle et dont la face supérieure comporte ladite au moins une découpe transversale (2, 2a, 2b), le muret (4) étant decalé d'un côté longitudinal du socle (3), laissant libre un côté du socle (3), les mors (1a, 1b, 1c, 1d, 1e, 1f) comportant en outre une colonne (5) prolongeant le muret (4) sur un premier côté du muret, les faces supérieures du socle (3), du muret (4) et de la colonne (5) réalisant un profil en marches d'escalier le muret (4) comportant également plusieurs découpes (2a, 2b) de réception de tubes (10a, 10b), les flancs latéraux du muret (4) comprenant entre lesdites découpes (2a, 2b) des nervures (7) d'accroissement de distance courante entre tubes (10a, 10b), et entre lesdites découpes (2a, 2b).

2. Dispositif de fixation de tuyauterie selon la revendication 1, pour lequel le socle (3) comporte une base élargie par rapport au muret (4) et réalise un profil d'accroissement de distance courante entre un support (20) et le ou les tubes (10a, 10b).

3. Dispositif de fixation de tuyauterie selon la revendication 1 ou 2, pour lequel la colonne (5) d'un premier mors (1a) complète le muret (4) d'un second mors (1b) sur le côté libre du socle (3) dudit second mors (1b), les mors (1a, 1b, 1c, 1d, 1e, 1f) étant conformés en pièces symétriques emboîtables.

4. Dispositif selon la revendication 1, 2 ou 3, caractérisé en ce la distance entre découpes (2a, 2b) est choisie en fonction d'une tension de claquage déterminée.

5. Dispositif selon la revendication 4, pour lequel la face supérieure du muret (4) comprend entre les découpes (2a, 2b), au moins un profil crénelé (6a, 6b, 6c) d'accroissement de distance courante entre tubes, et entre lesdites découpes (2a, 2b).

6. Dispositif selon l'une quelconque des revendications 1 à 5, pour lequel la hauteur du socle (3) et du muret (4) sont déterminées pour maintenir le ou les tubes (10a, 10b) à une distance déterminée d'une structure.

7. Dispositif selon l'une quelconque des revendications 1 à 6, pour lequel le muret (4) est configuré en sorte de maintenir un tube (10a, 10b) à une distance prédéterminée d'une structure ou d'un autre tube (10a, 10b).

## Patentansprüche

1. Befestigungsvorrichtung für Rohrleitungen eines Luftfahrzeugs, die einen Klemmring (1) umfasst, der aus zwei Backen (1a, 1b, 1c, 1d, 1e, 1f) besteht, die mindestens eine Queraussparung (2, 2a, 2b) zum Halten mindestens eines Rohrs (10a, 10b) der Rohrleitungen umfassen, wobei die Backen als Separatoren zur Unterbrechung kriechender Lichtbögen konfiguriert sind und dazu einen Sockel (3), eine niedrige Wand (4), die sich vom Sockel aus nach oben erstreckt und deren Oberseite die mindestens eine Queraussparung (2, 2a, 2b) umfasst, umfassen, wobei die niedrige Wand (4) auf einer Längsseite des Sockels (3) versetzt ist, wodurch eine Seite des Sockels (3) frei gelassen wird, wobei die Backen (1a, 1b, 1c, 1d, 1e, 1f) ferner einen Pfosten (5) umfassen, der die niedrige Wand (4) auf einer ersten Seite der niedrigen Wand verlängert, wobei die obere Seite des Sockels (3), der niedrigen Wand (4) und des Pfostens (5) ein Treppenstufenprofil bilden, wobei die niedrige Wand (4) auch mehrere Aussparungen (2a, 2b) zur Aufnahme von Rohren (10a, 10b) umfasst, wobei die lateralen Flanken der niedrigen Wand (4) zwischen den Aussparungen (2a, 2b) Rippen (7) zur Erhöhung der Laufstrecke zwischen Rohren (10a, 10b) aufweisen und zwischen den Aussparungen (2a, 2b).

2. Befestigungsvorrichtung für Rohrleitungen nach Anspruch 1, wobei der Sockel (3) eine Basis umfasst, die bezüglich der niedrigen Wand (4) breiter ist, und ein Profil erzeugt, das die Laufstrecke zwischen einem Träger (20) und dem Rohr oder den Rohren (10a, 10b) erhöht.

3. Befestigungsvorrichtung für Rohrleitungen nach Anspruch 1 oder 2, wobei der Pfosten (5) einer ersten Backe (1a) die niedrige Wand (4) einer zweiten Backe (1b) auf der freien Seite des Sockels (3) der zweiten Backe (1b) ergänzt, wobei die Backen (1a, 1b, 1c, 1d, 1e, 1f) als ineinanderpassbare symmetrische Komponenten konfiguriert sind.

4. Vorrichtung nach Anspruch 1, 2 oder 3, **dadurch gekennzeichnet, dass** der Abstand zwischen den Aussparungen (2a, 2b) als Funktion einer bestimmten Durchbruchspannung gewählt wird.

5. Vorrichtung nach Anspruch 4, wobei die Oberseite der niedrigen Wand (4) zwischen den Aussparungen (2a, 2b) mindestens ein Zinnenprofil (6a, 6b, 6c) zur Erhöhung der Laufstrecke zwischen Rohren und zwischen den Aussparungen (2a, 2b) aufweist.

6. Vorrichtung nach einem der Ansprüche 1 bis 5, wobei die Höhe des Sockels (3) und der niedrigen Wand (4) so bestimmt werden, dass das Rohr oder die Rohre (10a, 10b) um einen bestimmten Abstand von einer Struktur weg gehalten wird oder werden.

7. Vorrichtung nach einem der Ansprüche 1 bis 6, wobei die niedrige Wand (4) so ausgelegt ist, dass ein Rohr (10a, 10b) um einen vorbestimmten Abstand von einer Struktur oder von einem anderen Rohr (10a, 10b) weg gehalten wird.

## Claims

1. Device for securing aircraft pipelines which comprises a clamping ring (1) consisting of two jaws (1a, 1b, 1c, 1d, 1e, 1f) comprising at least one transverse cutout (2, 2a, 2b) for holding at least one tube (10a, 10b) of the said pipelines, the jaws being configured as separators that cut off creeping electric arcs and to do so comprise a plinth (3), a low wall (4) rising up from the plinth and the top face of which comprises the said at least one transverse cutout (2, 2a, 2b), the low wall (4) being offset on one longitudinal side of the plinth (3) leaving one side of the plinth (3) free, the jaws (1a, 1b, 1c, 1d, 1e, 1f) further comprising a post (5) extending the low wall (4) on a first side of the low wall, the upper faces of the plinth (3), of the low wall (4) and of the post (5) forming a staircase profile, the low wall (4) also comprising several cutouts (2a, 2b) for accepting tubes (10a, 10b), the lateral flanks of the low wall (4) comprising between the said cutouts (2a, 2b) ribs (7) for increasing the running distance between tubes (10a, 10b) and between the said cutouts (2a, 2b).

2. Device for securing pipelines according to Claim 1, for which the plinth (3) comprises a base that is widened in relation to the low wall (4) and creates a profile increasing the running distance between a support (20) and the tube or tubes (10a, 10b).

3. Device for securing pipelines according to Claim 1 or 2, for which the post (5) of a first jaw (1a) completes the low wall (4) of a second jaw (1b) on the free side of the plinth (3) of the said second jaw (1b), the jaws (1a, 1b, 1c, 1d, 1e, 1f) being configured as symmetrical components that can be nested together.

4. Device according to Claim 1, 2 or 3, **characterized in that** the distance between cutouts (2a, 2b) is chosen as a function of a determined breakdown voltage.

5. Device according to Claim 4, for which the top face of the low wall (4) comprises, between the cutouts (2a, 2b), at least one crenellated profile (6a, 6b, 6c) for increasing the running distance between tubes and between the said cutouts (2a, 2b).

6. Device according to any one of Claims 1 to 5, for which the height of the plinth (3) and of the low wall (4) are determined in order to keep the tube or tubes (10a, 10b) a determined distance away from a structure.

7. Device according to any one of Claims 1 to 6, for which the low wall (4) is configured in such a way as to keep a tube (10a, 10b) a predetermined distance away from a structure or from another tube (10a, 10b).
